# EUROPÄISCHE PATENTANMELDUNG

(11) **EP 2 294 942 A1**
(43) Veröffentlichungstag der Anmeldung: **16.03.2011**
(21) Anmeldenummer: 10009449.9
(22) Anmeldetag: 10.09.2010
(51) Int. Cl.: A47B 47/00, A47B 47/05, F16B 12/42

(54) **Systemmöbel mit Rundprofilgestell und Verkleidungsplatten**

(30) Priorität: 10.09.2009 DE 102009040714
(71) Anmelder: Otto, Sebastian, 31515 Wunstorf (DE)
(72) Erfinder: Otto, Sebastian, 31515 Wunstorf (DE)
(74) Vertreter: Günther, Constantin

(57) **Zusammenfassung**

Die Erfindung betrifft Systemmöbel für ein Möbelsystem aus rasterförmig aufgebauten Rundprofilgestellen, bei denen die Rasterflächen durch Platten oder Türen wenigstens teilweise geschlossen sind, gekennzeichnet durch auswechselbare Verkleidungsplatten (2), die in einem durch wenigstens ein Rundprofil (1) begrenzten Rahmen, in dessen zu füllender Ebene ein flaches Konstruktionselement (3) eingespannt ist, auf dem Konstruktionselement (3) aufliegen oder an diesem befestigt sind, wobei die Verkleidungsplatte (2) so ausgebildet ist, dass ihre nach außen gerichtete Oberfläche (5) größer ist als die freie Rahmenfläche, die Stirnseite (7) der Verkleidungsplatte (2) wenigstens über einen Teil der Breite zwischen Oberfläche (5) und Grundfläche (6) mit einem Gehrungsschnitt (4) abgeschrägt oder mit einer an das Rundprofil (1) angepassten Hohlkehle (9) versehen ist und die zum Konstruktionselement (3) gerichtete Grundfläche (6) der Verkleidungsplatte (2) im Falle einer abgeschrägten Stirnseite (7) kleiner als die freie Rahmenfläche ist und im Falle der angepassten Hohlkehle kleiner oder gleich der freien Rahmenfläche ist.

## Beschreibung

Die Erfindung betrifft Systemmöbel für ein Möbelsystem aus rasterförmig aufgebauten Rundprofilgestellen, bei denen die Rasterflächen durch Platten oder Türen wenigstens teilweise geschlossen sind, sowie für diese Möbelsysteme geeignete auswechselbare Verkleidungsplatten zur Variation der Möbeloberflächen und des Gesamtcharakters.

Modulare Möbelsysteme sind seit langem bekannt und werden für verschiedenste Inneneinrichtungszwecke verwendet. Die einzelnen Module, wie Schrankelemente, Schubladenelemente, Auszüge usw., werden dabei auf die unterschiedlichste Art verbunden. Neben einfachen Stapelelementen werden besonders solche Systeme bevorzugt, bei denen die Module an einem Gestell befestigt, in ein Gestell eingehängt oder mit Hilfe eines ein Möbelraster bildenden Gestells konstruiert werden.

Aus der DE 43 34 669 C2 ist ein Möbelsystem bekannt, das zwischen vertikal verlaufenden Rundprofilständern aufgebaut wird. Aufleger für Böden bzw. Zwischenböden werden dabei mit Hilfe ringförmiger Ansätze in die Rundprofilständer eingesetzt. Das System ist bezüglich der Höhe der Einzelmodule sehr flexibel, betont jedoch stets die Vertikale und lässt nicht den Moduleindruck gleichförmig ausgebildeter Kästen zu.

Aus der DE 25 25 791-A ist ein Möbelsystem auf der Basis von Gestellen aus Profilen mit Eckverbindungen von mindestens zwei Profilenden bekannt, wobei als Profile leicht abgerundete Vierkanthölzer mit quadratischem Querschnitt vorgesehen sind.

Aus rein ästhetischen Gründen kann es gewünscht sein, modulare Möbelsysteme auf Basis von Rundprofilgestellen anbieten zu können. Wenn die gesamte Ständer- oder Rahmenkonstruktion vertikal und horizontal allein aus Rundprofilen vorgesehen wird, betont dies sehr schön die modulare Struktur des Möbelsystems und es ergibt sich eine Art "Baukasteneffekt". Häufig werden dann die Rundprofile aus Metall (Stahl, Chrom) vorgesehen, während die Füllungen beispielsweise holzfarben oder farbig lackiert sein können.

Derartige Möbelsysteme betonen jedoch das "Baukastenprinzip" derartig stark, dass ein sehr technischer Eindruck erreicht wird, der häufig im Wohnbereich oder auch allgemein bei der Mitverwendung von Holz nicht gewünscht ist.

Ein weiteres Problem bei durchgängig rund profilierten Rahmen besteht in den Eckverbindungen und dem Einsatz bzw. der Befestigung der Flächenfüllungen. Die Flächenfüllungen sind häufig in Nuten der Rundprofile gehaltert und daher nicht einfach austauschbar. Die optische Variabilität des Systems wird dadurch stark begrenzt.

Die Aufgabe der Erfindung besteht darin, die vorstehenden Nachteile zu vermeiden und ein Möbelsystem aus in einem Raster angeordneten Rundprofilgestellen so auszubilden, dass die Rasterflächen leicht austauschbar sind und das System hierdurch variabel gestaltet werden kann.

Diese Aufgabe wird gelöst durch das Systemmöbel nach Anspruch 1, die zugehörige Verkleidungsplatte nach Anspruch 9 sowie die Verwendung einer Platte für ein Möbelsystem nach Anspruch 11.

Bevorzugte Ausgestaltungen der Erfindung sind in den Unteransprüche gekennzeichnet.

Erfindungsgemäß ist vorgesehen, dass die Möbelstücke - hierzu zählen auch Container, Behälter, Boxen, Spezialmöbel aller Art usw. - jeweils aus ein Raster bildenden Rundprofilgestellen bestehen, bei denen die Rasterflächen durch Platten oder Türen oder weitere Elemente wenigstens teilweise geschlossen sind. Selbstverständlich sind auch netz- oder siebförmige Platten oder Gitter als Füllungen der Rasterfläche möglich. Das Gestellt des Möbelteils weist daher mehrere durch wenigstens ein Rundprofil, im allgemeinen jedoch durch vier Rundprofile begrenzte Rahmen auf, die im Falle von Regalelementen teils offen bleiben, die jedoch andererseits auch durch Seitenteile, Böden, Deckel und Rückwände begrenzt werden. Erfindungsgemäß ist vorgesehen, dass ein solcher durch wenigstens ein Rundprofil begrenzter Rahmen in seiner zu füllenden Ebene ein flaches Konstruktionselement aufweist, das in diesem Rahmen eingespannt ist. Das Konstruktionselement kann im einfachsten Fall ein reines Verstärkungselement, wie z.B. ein Kreuz aus Streben, sein oder auch ein Gitter oder eine Platte, die wiederum in sich geschlossen, durchbrochen und/oder profiliert sein kann. Das Konstruktionselement kann dünn und materialsparend ausgebildet sein, da es bei dem erfindungsgemäßen Möbelsystem durch Verkleidungsplatten verdeckt wird, soweit dies aus optischen Gründen angezeigt ist.

In einem besonders bevorzugten Ausführungsbeispiel ist die Stirnseite der Verkleidungsplatte über den größten Teil ihrer Breite abgeschrägt und zwar zur ihrer Grundfläche hin, die dadurch kleiner ist als die freie Rahmenfläche. Die Verkleidungsplatte liegt mit der Grundfläche auf dem Konstruktionselement auf und grenzt in einem besonders bevorzugten Ausführungsbeispiel so an das Rundprofil an, dass die Abschrägung der Verkleidungsplatte tangential an dem Rundprofil anliegt.

Bevorzugt ist die Stirnseite gerundet. Der Rundungsschnitt reicht vorzugsweise bis auf eine kleine Nut an das Rundprofil heran, so dass ein formschöner und flächenbündiger Abschluss zum Rundprofil hin entsteht.

Der optimale Winkel für die Abschrägung ergibt sich am Besten aus der Stärke der Verkleidungsplatte, der gewünschten Größe der Plattenoberfläche (bis zur Mitte des angrenzenden Rundprofils, kleiner oder größer als das) und der Bedingung, dass die Schrägung tangential am Rundprofil anliegen soll. Gerade durch diese Konstruktion erhält die Verkleidungsplatte ihren optimalen Sitz und kann so sehr gut an dem Gerüst aus Rundprofilgestell und Konstruktionselementen angebracht werden, ohne dass sie einerseits verrutscht oder andererseits verklemmt. Gewisse Abweichungen von diesem optimalen Winkel sind allerdings unschädlich. Auch wird es vorteilhaft sein, dass die Abschrägung nicht über die gesamte Breite der Stirnseite geführt wird, da sonst zur Oberfläche hin ein spitzer Winkel entsteht, der sich leicht abstößt. Eine gerade Stirnseite, die zur Oberfläche rechtwinklig verläuft, wird deswegen bevorzugt.

Aus optischen Gründen ist es weiterhin bevorzugt, dass die Stärke der Verkleidungsplatte (oder die Dicke "h") der Rahmentiefe zwischen höchstem Punkt des Rundprofils und Konstruktionselement entspricht. Hierdurch ergeben sich optisch nicht versetzte glatte Oberflächen, die die unterteilenden Rundprofile zwischen einzelnen Modulen je nach Verhältnis von Abschrägung zu gerade Stirnseite mehr oder weniger mit einbeziehen oder weitgehend abdecken, jedoch nicht eines der Elemente gegenüber dem anderen hervortreten lassen.

Vorzugsweise ist weiter vorgesehen, dass die Oberfläche der Verkleidungsplatte angrenzend an ein Rundprofil in ihrer Flächenausdehnung bis maximal zu dessen Mitte reicht, wobei eine kleinere Oberfläche, die sich nicht bis zur Mitte des Rundprofils ausdehnt, in den meisten Fällen optisch bevorzugt wird.

Die Rundprofile können vorteilhaft aus Metall bestehen, müssen jedoch nicht aus diesem Material gefertigt werden. Die Verkleidungsplatten können aus jedem beliebigen Auflagematerial hergestellt werden, so aus Holz, Kunststoff, Glas, Stein und/oder Metall, auch aus Metallhohlprofilen, bevorzugt aber aus Holz oder unter Verwendung von Holz.

Wird die Verkleidungsplatte waagerecht als Einlegeboden verwendet, kann sie lose auf dem Konstruktionselement aufliegen und wird durch ihr Eigengewicht gehalten. Durch die optimale Randkonstruktion verrutscht sie nicht. In Weiterbildung der Erfindung ist jedoch vorgesehen, dass die Verkleidungsplatten an den Konstruktionselementen festgeklebt oder mit Rastelementen oder auch Klettband verbunden sein können. Eine Verklebung mit Haftkleber, der sich vollständig wieder abziehen lässt, ist bevorzugt. Der Haftkleberauftrag kann sich auf eine kleine Fläche je Verkleidungsplatte beschränken. Bei der Verwendung von Rastelementen wird ein Gegenstück am Verbindungselement und das andere Gegenstück an der Verkleidungsplatte befestigt, so dass die Rastverbindung beim Einsetzen der Verkleidungsplatte auf dem Konstruktionselement eingreift (in eine rastende Verbindung tritt). Eine Klebe- oder Rastverbindung wird jedoch nur als erforderlich angesehen, wenn die Verkleidungsplatten an Seitenwänden, d.h. vertikal oder sogar an ausklappbaren Schreibtisch- oder Barelementen hängend angebracht werden sollen.

Beim Einsatz einer dünnen Ausfachungsplatte als Konstruktionselement bringt ein Einlageboden (die Verkleidungsplatte) den positiven Effekt mit sich, dass dadurch eine Lastverteilung in der Oberfläche erfolgt. Es ergibt sich eine bessere Stabilität.

Im Folgenden wird die Erfindung anhand eines in der Zeichnung dargestellten Ausführungsbeispiels näher beschrieben. Es zeigen:
- Figur 1: ein erstes Ausführungsbeispiel eines Systemmöbelbereichs in ei- ner Teilquerschnittsansicht an der Verbindungsstelle Rundprofil - abgeschrägte Verkleidungsplatte - Konstruktionselement;
- Figur 1a: dasselbe Ausführungsbeispiel mit Klebeverbindung oder Klettband;
- Figur 2: ein weiteres Ausführungsbeispiel mit Hohlkehle an der Verklei- dungsplatte in entsprechender Ansicht wie bei Figur 1; und
- Figur 2a: ein entsprechendes Beispiel wie in Figur 2 mit Klebeverbindung.

### Bezugszeichenliste

- 1: Rundprofil
- 1.1: Nut des Rundprofils
- 2: Verkleidungsplatte
- 3: Konstruktionselement
- 4: Abschrägung der Verkleidungsplatte 2
- 5: Oberfläche der Verkleidungsplatte 2
- 6: Grundfläche der Verkleidungsplatte 2
- 7: Stirnseite der Verkleidungsplatte 2
- 8: Haftklebemittel, Klettband, Rastelement
- 9: Hohlkehle

- h: Stärke der Verkleidungsplatte 2

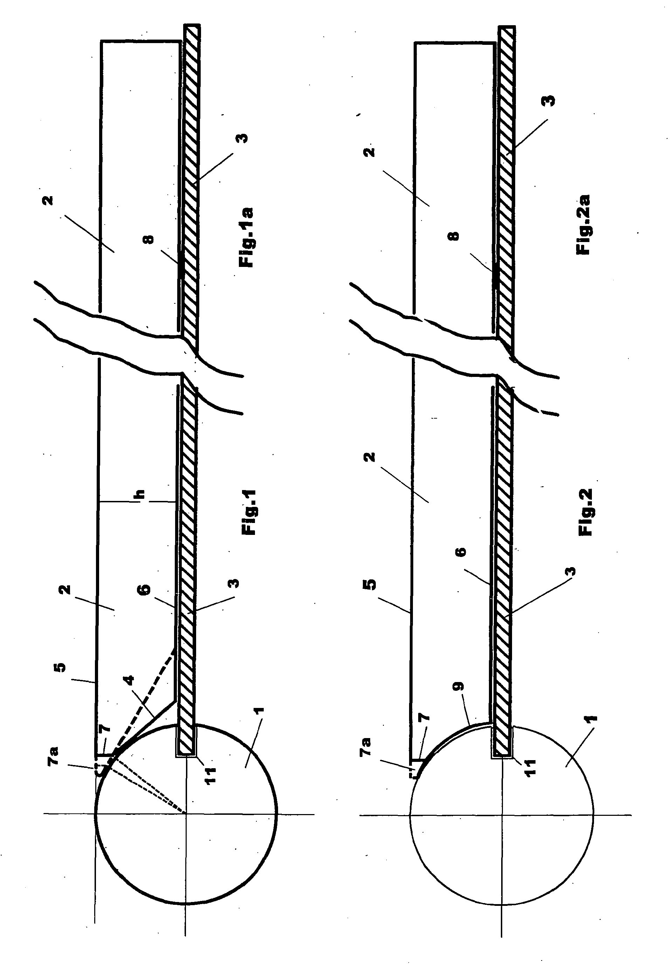

Figur 1 zeigt den quer zu einem Rundprofil 1 geschnittenen Anschlussbereich zwischen Rundprofil 1, Verkleidungsplatte 2 und Konstruktionselement 3 an einem im Ganzen nicht näher dargestellten Systemmöbel. Das Konstruktionselement 3 ist in eine Nut 11 des Rundprofils 1 eingeführt und wird auf diese Weise im Zusammenwirken mit weiteren in der Zeichnung nicht dargestellten Rundprofilen in einem Profilrahmen fest gehaltert. Dabei ist es auch möglich, dass das Konstruktionselement 3 beispielsweise nur von einem oder zwei sich gegenüberliegenden Rundprofilen 1 umgeben ist, während sich an den weiteren Rahmenseiten andere Profile befinden. Die Verkleidungsplatte 2 besitzt dann nur im Anschluss an die Rundprofile 1 Abschrägungen/Gehrungsschnitte 4. Beispielsweise ist es auch möglich, dass ein längliches Rahmenelement aus Rundprofilen 1 und einem lang gestreckten Konstruktionselement 3 von mehreren Verkleidungsplatten 2 abgedeckt wird, die unter einander stirnseitig stumpf aufeinander stoßen, um innerhalb eines Rahmens alternierende Dekore zu ermöglichen. Die Stärke "h" der Verkleidungsplatte 2 wurde im Beispiel nach Figur 1 so gewählt, dass die Oberfläche 5 der Verkleidungsplatte auf gleicher Höhe liegt wie der Scheitelpunkt des Rundprofils 1, oder anders ausgedrückt, wurde die Stärke "h" entsprechend der Rahmentiefe gewählt, also dem Abstand zwischen höchstem Punkt des Rundprofils 1 und Konstruktionselement 3. Die Ausdehnung der Oberfläche ist so gewählt, dass sie größer ist als die freie Rahmenfläche, d.h. die Fläche, die das Konstruktionselement 3 zwischen den Rundprofilen 1 einnimmt, ohne Berücksichtigung des in die Nut 11 des Rundprofils 1 eingeschobenen Teils des Konstruktionselements 3. Die Ausdehnung der Oberfläche 5 wird so gewählt, dass sie auf optisch ansprechende Weise den Blick auf das Rundprofil 1 freilegt, dieses jedoch auch immer in gewissem Grade verdeckt, um eine geschlossener Möbeloberfläche zu erzeugen. Die Fläche der Grundfläche 6 der Verkleidungsplatte 2 ergibt sich aus dem Maß der Abschrägung, die optimal so gewählt wird, dass die Abschrägung/Gehrung 4 tangential am Rundprofil 1 anliegt. Gleichzeitig geht hier mit ein, welchen Anteil an der Stärke "h" der nicht abgeschrägte Teil der Stirnseite 7 besitzen soll. Die Stirnseite kann gerundet sein (7a).

Allein zur besseren Anschauung wird dieser Zusammenhang nochmals durch die strichpunktierten Linien verdeutlicht, die zeigen, wie sich der Abschrägungswinkel verändert, wenn die flächenmäßige Ausdehnung der Oberfläche 5 größer und der nicht abgeschrägte Teil der geraden oder gerundeten Stirnseite 7, 7a kleiner gewählt wird, vorausgesetzt dass die Bedingung für den Abschluss der Oberfläche 5 der Verkleidungsplatte 2 mit der Rahmentiefe erhalten bleibt.

Figur 1 a zeigt ein entsprechendes Ausführungsbeispiel wie in Figur 1, das mit einem zusätzlichen Haftklebemittel 8 in Form eines Patches versehen ist.

Figur 2 zeigt ein anderes Ausführungsbeispiel für eine mögliche Verbindung zwischen Rundprofil 1, Verkleidungsplatte 2 und Konstruktionselement 3, bei dem die Einpassung der Verkleidungsplatte 2 mit Hilfe einer zwischen Stirnfläche 7 und Grundfläche 6 angeordneten Hohlkehle 9 hergestellt wird. Gleiche Bauteile sind im Übrigen mit gleichen Bezugsziffern gekennzeichnet. Wie leicht zu erkennen, erfordert die Einpassung mit Hilfe der Hohlkehle 9 eine genaue Ausarbeitung und exakte Anpassung an die Rundung des Rundprofils 1. Die mit der Abschrägung arbeitenden Ausführungsbeispiele, wie in Figur 1 gezeigt, sind daher bevorzugt, denn sie ermöglichen auf einfache Weise einen passgenauen Sitz ohne Verklemmen oder Verrutschen. Auch bei dem Beispiel gemäß Figur 2 kann ein Haftklebemittel vorgesehen sein, wie in Figur 2a zu erkennen. Alternativ können an Position 8 auch jeweils Rastelemente Verwendung finden. Diese besitzen jedoch den Nachteil, dass sie sehr genau positioniert werden müssen. Außerdem verbleibt das eine Gegenstück des Rastelements beim Abnehmen der Verkleidungsplatte 2 auf dem Konstruktionselement 3, so dass das Möbelstück nicht mehr ohne Verkleidungsplatte verwendet werden kann. Soweit erforderlich wird daher derzeit eine Verklebung mit einem vollständig wieder abziehbaren Haftklebestoff bevorzugt. Dieser ist im Handel in verschiedenen Qualitäten und Anwendungsformen erhältlich. Auch in Figur 2 kann die Stirnseite gerundet sein, wie in der Figur gestrichelt mit 7a angedeutet.

## Patentansprüche

1. Systemmöbel für ein Möbelsystem aus rasterförmig aufgebauten Rundprofilgestellen, bei denen die Rasterflächen durch Platten oder Türen wenigstens teilweise geschlossen sind, **gekennzeichnet durch** auswechselbare Verkleidungsplatten (2), die in einem **durch** wenigstens ein Rundprofil (1) begrenzten Rahmen, in dessen zu füllender Ebene ein flaches Konstruktionselement (3) eingespannt ist, auf dem Konstruktiönselement (3) aufliegen oder an diesem befestigt sind, wobei die Verkleidungsplatte (2) so ausgebildet ist, dass ihre nach außen gerichtete Oberfläche (5) größer ist als die freie Rahmenfläche, die Stirnseite (7) der Verkleidungsplatte (2) wenigstens über einen Teil der Breite zwischen Oberfläche (5) und Grundfläche (6) mit einem Gehrungsschnitt (4) abgeschrägt oder mit einer an das Rundprofil (1) angepassten Hohlkehle (9) versehen ist und die zum Konstruktionselement (3) gerichtete Grundfläche (6) der Verkleidungsplatte (2) im Falle einer abgeschrägten Stirnseite (7) kleiner als die freie Rahmenfläche ist und im Falle der angepassten Hohlkehle kleiner oder gleich der freien Rahmenfläche ist.

2. Systemmöbel nach Anspruch 1, **dadurch gekennzeichnet, dass** die Stirnseite (7) der Verkleidungsplatte (2) über den größeren Teil ihrer Breite abgeschrägt ist und der verbleibende Teil vorzugsweise zusätzlich gerundet ist.

3. Systemmöbel nach Anspruch 1 oder 2, **dadurch gekennzeichnet, dass** die Abschrägung (4) der Verkleidungsplatte (2) so ausgebildet ist, dass sie tangential an dem Rundprofil (1) anliegt.

4. Systemmöbel nach einem der Ansprüche 1 bis 3, **dadurch gekennzeichnet, dass** die Stärke (h) der Verkleidungsplatte (2) der Rahmentiefe zwischen höchstem Punkt des Rundprofils (1) und Konstruktionselement (3) entspricht.

5. Systemmöbel nach einem der Ansprüche 1 bis 4, **dadurch gekennzeichnet, dass** die Oberfläche (5) der Verkleidungsplatte (2) sich angrenzend an ein Rundprofil (1) bis maximal zu dessen Scheitelpunkt ausdehnt.

6. Systemmöbel nach einem der Ansprüche 1 bis 5, **dadurch gekennzeichnet, dass** die Rundprofile (1) aus Metall bestehen.

7. Systemmöbel nach einem der Ansprüche 1 bis 6, **dadurch gekennzeichnet, dass** die Verkleidungsplatten (2) aus Holz bestehen oder unter Verwendung von Holz gearbeitet sind.

8. Systemmöbel nach einem der Ansprüche 1 bis 7, **dadurch gekennzeichnet, dass** die Verkleidungsplatte (2) am Konstruktionselement (3) durch Haftklebemittel (8), Rastelemente oder Klettband verbunden ist.

9. Verkleidungsplatte (2) für Möbelsysteme mit Rundprofilrahmen, **dadurch gekennzeichnet, dass** die Verkleidungsplatte (2) an wenigstens einer Stirnseite (7) über einen Teil der Stirnseitenbreite zu ihrer Unterseite hin mit einem Gehrungsschnitt (4) abgeschrägt oder mit einer Hohlkehle (9) versehen ist und das Verhältnis von abgeschrägtem zu nicht abgeschrägtem jedoch vorzugsweise in sich gerundeten Teil der Stirnseite (7) in Bezug auf die Plattendichte zwischen 50:50 und 95:5 beträgt.

10. Verkleidungsplatte (2) nach Anspruch 9, **dadurch gekennzeichnet, dass** sie aus Holz besteht oder unter Verwendung von Holz gearbeitet ist.

11. Verwendung einer Platte, die an ihren Stirnseiten (7) über einen Teil der Stirnseitenbreite zu ihrer Unterseite hin abgeschrägt oder mit einer Hohlkehle (9) versehen ist und bei der das Verhältnis von abgeschrägtem zu nicht abgeschrägtem jedoch vorzugsweise gerundetem Teil der Stirnseite (7) in Bezug auf die Plattendichte (h) zwischen 50:50 und 95:5 liegt, als Verkleidungsplatte (2) für Möbelsysteme mit Rundprofilrahmen.

12. Verwendung nach Anspruch 11, **dadurch gekennzeichnet, dass** die Verkleidungsplatte aus Holz besteht oder unter Verwendung von Holz gearbeitet ist.
